Europäisches Patentamt

European Patent Office

Office européen des brevets

(11) Veröffentlichungsnummer: **0 270 060 B1**

# EUROPÄISCHE PATENTSCHRIFT

(45) Veröffentlichungstag der Patentschrift: **30.03.94**

(51) Int. Cl.5: **G05B 19/415**, G05B 19/18

(21) Anmeldenummer: **87117697.0**

(22) Anmeldetag: **30.11.87**

(54) **Numerisches Steuersystem für hochdynamische Prozesse.**

(30) Priorität: **01.12.86 DE 3640987**
**02.11.87 DE 3644952**

(43) Veröffentlichungstag der Anmeldung:
**08.06.88 Patentblatt 88/23**

(45) Bekanntmachung des Hinweises auf die
Patenterteilung:
**30.03.94 Patentblatt 94/13**

(84) Benannte Vertragsstaaten:
**CH DE FR GB IT LI LU SE**

(56) Entgegenhaltungen:
DE-A- 2 030 711
DE-A- 2 049 898
DE-A- 2 845 953
FR-A- 2 191 766

A.H.Al-ANBUKY: "Microprocessor based
wide range interpolator for high performance cnc mac.",22. Oktober 1984, IECON 84,
Tokyo,JP, Seiten 539-544

MYOUNG SAM KO: "A high speed linear interpolator for a refence-pulse cnc system",29. September 1986, IECON 86, Milwaukee,WI, US, Seiten 727-732

INDUSTRIEANZEIGER, HGF Kurzberichte der
Hochschulgruppe Fertigungstechnik der
Technischen Hochschulen und Universitäten der Bundesrepublik Deutschland, HGF
624 84/1, Nr. 1/2 vom 6. Januar 1984;
G.GRUHLER und M.KEPPELER: "Automatische Datenreduktion und Auswahl der Interpolationsart bei Roboter-Bewegungsprogrammen", Seiten 25 und 26

(73) Patentinhaber: **AG für industrielle Elektronik
AGIE Losone bei Locarno**

**CH-6616 Losone/Locarno(CH)**

(72) Erfinder: **Bühler, Ernst
Salita degli Orti
CH-6616 Losone(CH)**
Erfinder: **Boccadoro, Marco
Brogirolo
CH-6653 Verscio(CH)**

(74) Vertreter: **EGLI-EUROPEAN PATENT ATTOR-
NEYS
Widenmayerstrasse 5
D-80538 München (DE)**

## Beschreibung

Die vorliegende Erfindung betrifft ein numerisches Steuersystem für hochdynamische Prozesse mit einem Grobinterpolator zum Ausgeben von vektoriellen Bahnelementen an einen Feininterpolator.

G. Gruhler und M. Keppler beschreiben in ihrem Artikel "Automatische Datenreduktion und Auswahl der Interpolationsart bei Roboter-Bewegungsprogrammen" (in: Industrieanzeiger, HGF Kurzberichte der Hochschulgruppe Fertigungstechnik der Technischen Hochschulen und Universitäten der Bundesrepublik Deutschland, HGF 624 84/1, Nr. 1/2 v. 6.1.1984, S. 25 und 26) ein Verfahren zur Reduzierung überflüssigen ISO-Codes durch eine Interpolation, der durch eine handgeführte Musterprogrammierung (Teach in) z.B. eines Schweissroboters entstanden ist. Dabei geht es jedoch nicht um eine Datenreduktion während des eigentlichen, zeitkritischen Interpolationsvorganges. Das Interpolationskriterium ist zwar auch eine zulässige Bahntoleranz. Das resultierende Datenkonzentrat ist jedoch immer noch ISO-Code.

Die DE-A-20 30 711 zeigt eine rekursive Funktionsberechnung erster Ordnung. Dieses verfahren ist wegen seines großen systematischen Fehlers für eine Grobinterpolation mit einem Zeitraster von z.B. 20 ms ungeeignet. Es handelt sich ferner um einen einstufigen Interpolator mit Zeitrasterausgabe mit allen nachstehend noch näher diskutierten Problemen. Der Grobinterpolator arbeitet nicht zeitrasterunabhängig.

Die DE-A-28 45 953 zeigt ein für nicht hochdynamische Prozesse ausgelegtes Steuersystem. Es liegt zwar im Prinzip ein zweistufiger Interpolator vor. Der Grobinterpolator rechnet jedoch ebenfalls in einem festen Zeitraster. Analoges gilt für die DDR Patentschriften 132610 und 132611, die eine zweistufige, jedoch auf eine Kreisinterpolation beschränkte, Interpolation mit einem festen Zeitraster des Grobinterpolators zeigen.

Ein Steuersystem der eingangs genannten Art ist beispielsweise aus dem Fachbuch "R.Nann, Rechnersteuerung von Fertigungseinrichtungen" ISW 4 Springer-Verlag, Berlin, Heidelberg, New York, 1972, S 113 - 123, bekannt. Bei der bekannten Rechnersteuerung arbeitet der Grobinterpolator, dem ein Feininterpolator nachgeschaltet ist, in einem vorbestimmten Zeitraster. Die Verwendung dieses festen Zeitrasters für die Grobinterpolation hat den Nachteil, daß bei schwach gekrümmten Konturen ein zu niedriger Stützpunktabstand gewählt wird, wodurch der Grobinterpolator eine unnötige Datenflut erzeugt und unnötig mit Berechnungen dieser Stützpunkte belastet wird. Ein weiterer Nachteil des festen Zeitrasters für die Grobinterpolation tritt insbesondere dann in den Vordergrund, wenn ein derartiges Steuersystem zum Steuern der Bahn einer Funkenerosionsmaschine verwendet wird. Wenn im festen Zeitraster gearbeitet wird, wird das Bahnende einer Bahnkontur durch ein abschliessendes Bahnelement erreicht, das sich in seiner Länge von der vorhergehenden Bahnelementen üblicherweise stark unterscheidet. Damit tritt am Ende der Bahnkontur ein Geschwindigkeitssprung auf.

Gegenüber diesem Stand der Technik liegt der vorliegenden Erfindung die Aufgabe zugrunde, ein numerisches Steuersystem der eingangs genannten Art so weiterzubilden, daß trotz hoher Genauigkeit der vom Grobinterpolator durch Grobinterpolation gewonnenen Bahnelemente eine Reduktion der vom Grobinterpolator zu handhabenden Datenmenge erreicht wird.

Diese Aufgabe wird bei einem numerischen Steuersystem gemäß dem Oberbegriff des Patentanspruchs 1 durch die im kennzeichnenden Teil des Patentanspruchs 1 angegebenen Merkmale gelöst.

Der erfindungsgemäße Grobinterpolator verzichtet völlig auf die im Stand der Technik allgemein als notwendig angesehene Zeitrasterbasis und erzeugt anstatt dessen die Bahnelemente bzw. Interpolationspunkte abhängig von der Kontur der Bahn. Durch die geometrieabhängige Datenberechnung wird eine erhebliche Entlastung des Grobinterpolators erreicht.

Durch die im Anspruch 2 angegebene Überprüfung der Maßdifferenz zwischen dem momentanen Stützpunkt und der Endkoordinate der Bahn bzw. dem Endstützpunkt der Bahn werden Rundungsfehler und Berechnungsrestfehler eliminiert.

Bevorzugte vorbestimmte Vektorlängen sind Gegenstand des Anspruchs 3.

Nachfolgend werden unter Bezugnahme auf die beiliegenden Zeichnungen bevorzugte Ausführungsformen der vorliegenden Erfindung näher erläutert. Es zeigen:

Fig. 1    ein Blockdiagramm eines numerischen Steuersystems;

Fig. 2    eine Darstellung einer vierachsigen räumlichen Bewegung;

Fig. 3    eine Darstellung einer zirkularen Grobinterpolation;

Fig. 4    eine Darstellung für die Erläuterung der Berechnung des Bahnfehlers und der Achsenkomponenten für die zirkulare Grobinterpolation;

Fig. 5    eine Darstellung einer linearen Grobinterpolation;

Fig. 6    eine Darstellung zur Erläuterung der Berechnung des Bahnfehlers und der Achsenkomponenten für die lineare Grobinterpolation;

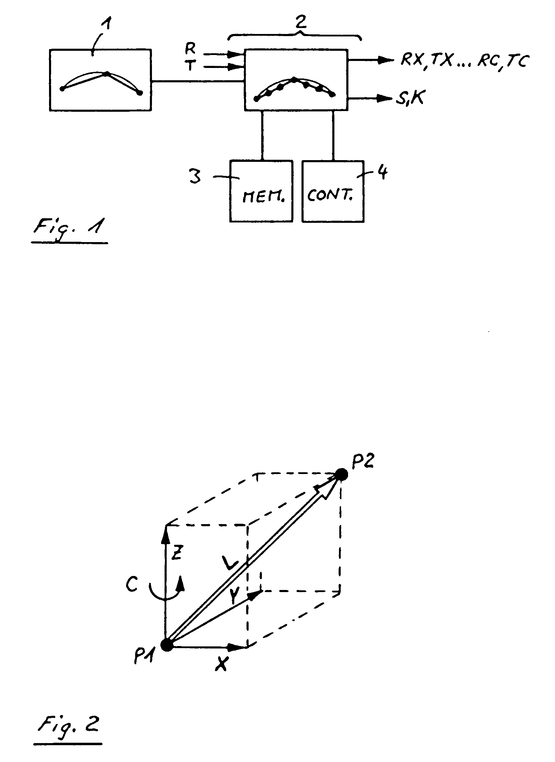

Fig. 1 zeigt die beiden Hauptkomponenten des Systems: den Grobinterpolator 1 welcher die Geometrie auf Geradenabschnitte reduziert und diese reduzierte Geometrie zusammen mit weiteren Steuerinformationen an den Feininterpolator 2 weitergibt und den Feininterpolator 2 der seinerseits Informationen über Systemzustand, Prozesszustand oder erreichte Geometriepunkte an den Grobinterpolator 1 zurückmelden kann.

Der Feininterpolator 2 enthält einen Zwischenspeicher 3 ,in dem die Informationen vom Grobinterpolator 1 geordnet abgelegt werden. Dieser Zwischenspeicher 3 wird normalerweise mit RAM (Schreib- und Lesespeicher mit freiem Zugriff) bestückt.

Die Kapazität des Speichers kann ohne weiteres bis zu einem Mbyte, d.h. einer Million 8-bit-Datenworte betragen. Eine kleinste Auführung hätte etwa 2 Kbyte und würde bei langen Programmen bei laufendem Prozess - nach erfolgter Rückmeldung - vom Grobinterpolator 1 asynchron nachgeladen. Auch dieser Vorgang kann natürlich blockweise vorwärts und rückwärts ausgeführt werden, so dass man immer bis zum Startpunkt zurück interpolieren kann.

Der Feininterpolator 2 enthält weiter ein autonomes Steuersystem 4 , welches im wesentlichen aus einer Ablaufsteuerung besteht. Diese Ablaufsteuerung wird durch verschiedene Steuersignale aktiviert und führt, noch abhängig von Zustandssignalen, eine von mehreren vorprogrammierten Steuersequenzen aus. Diese Steuersequenzen bewirken z.B., dass der Feininterpolator ein Byte vom Grobinterpolator 1 annimmt, dieses an der um 1 inkrementierten Adresse des Zwischenspeichers 3 abspeichert und die Annahme dem Grobinterpolator 1 quittiert. Wenn das Servowegraster-Taktsignal T ein neues Weginkrement fordert, wird in Abhängigkeit vom Servo-Richtungssignal R eine Steuersequenz zum Vorwärts - bzw. Rückwärtsinterpolieren aktiviert. Die Ablaufgeschwindigkeit kann so hoch sein, dass schon Mikrosekunden nach dem Servowegraster-Taktsignal T oder sogar noch früher die Achsenausgänge RX,TX,RY,TY,RZ,TZ,RC,TC die richtigen Weginkremente aufweisen. Es ist auch möglich, zwischen zwei Weginkrementen noch Prozessparameter S,K auszugegeben; diese können im Zwischenspeicher 3 an diesem Punkt der Geometrie abgelegt sein, oder vom Grobinterpolator 1 als direktes, manuelles Kommando ausgegeben werden, das seinerseits eine entsprechende Steuersequenz auslöst. Die Prozessparameter S,K bestehen aus einer Adresse S , die sagt, welcher Parameter des Systems oder des Prozesses verändert werden soll, und einem Wert K , welcher der neuen Einstellung dieses Parameters entspricht. So können alle Parameter über einen Bus und je einen Adressendekodierer, welcher im Koinzidenzfall den Wert K in ein Register annimmt, ohne grossen Verdrahtungsaufwand gesteuert werden.

Fig. 2 zeigt am Beispiel einer vierachsig gesteuerten Senkerosionsmaschine räumlich dargestellt die Bahnelemente L,X,Y,Z,C wie sie vom Grobinterpolator 1 ausgegeben werden. Ein Vektor der Länge L verbindet in gerader Linie den Raumpunkt P1 mit dem Raumpunkt P2 , und weicht dabei, wie nachfolgend erklärt wird, nirgends mehr als einen zulässigen Bahnfehler E von der gewollten Bahn ab.

Diese Vektorlänge L ist nachher die Referenz für die Aufsummierung der Servowegraster-Taktsignale, womit eine vektorielle Geschwindigkeitstreue des Systems garantiert wird. Die kartesischen Achsenkomponenten X,Y,Z sowie die Komponente für die Drehung C um die Z-Achse werden ebenfalls an den Feininterpolator übergeben und bestimmen nachher das Teilungsverhältnis in einem programmierbaren Frequenzteiler 5 . Die Anzahl und Art der Achsen kann von Prozess zu Prozess stark differieren. So haben funkenerosive Drahtschneidmaschinen neben den drei Hauptachsen X,Y,Z noch die Konikachsen U,V . Auch moderne Laserschneidmaschinen haben mindestens fünf Achsen, um den Laserstrahl auf vorgeformte Blechteile immer optimal auszurichten.

Heutige preiswerte Personalcomputer können mathematische Gleitkommaoperationen recht schnell und genau ausführen, sofern nicht Winkelfunktionen (z.B. Sinus, Cosinus oder Tangens) verlangt werden. Anderseits gibt es jetzt digitale Signalprozessoren und Einchip-Gleitkommaprozessoren, welche für die Rechengeschwindigkeit der Grundoperationen keine Wünsche mehr offen lassen. So bringen es neue Chips in 100ns fertig eine 32-bit Gleitkomma-Addition oder -Multiplikation auszuführen.

Ein Gleitkomma-Prozessor schafft bei doppelter Genauigkeit (11 bit Exponent, 52 bit Mantisse) alle Grundoperationen und Quadratwurzeln in weniger als 8μs, während z.B. eine Tangensfunktion schon 30μs benötigt.

Weil zudem viele Prozessoren überhaupt keine Winkelfunktionen im Befehlssatz haben, ist ein Grobinterpolator, welcher diese Winkelfunktionen nicht benötigt, sehr vorteilhaft.

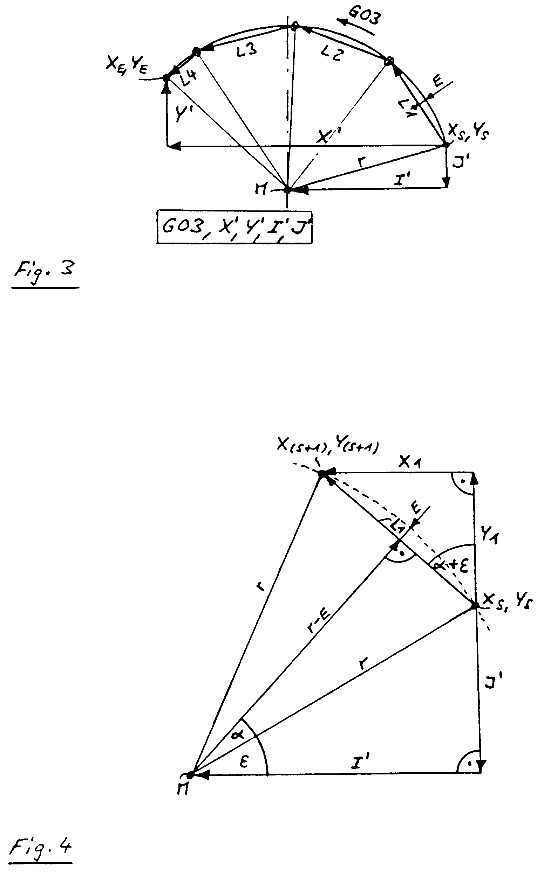

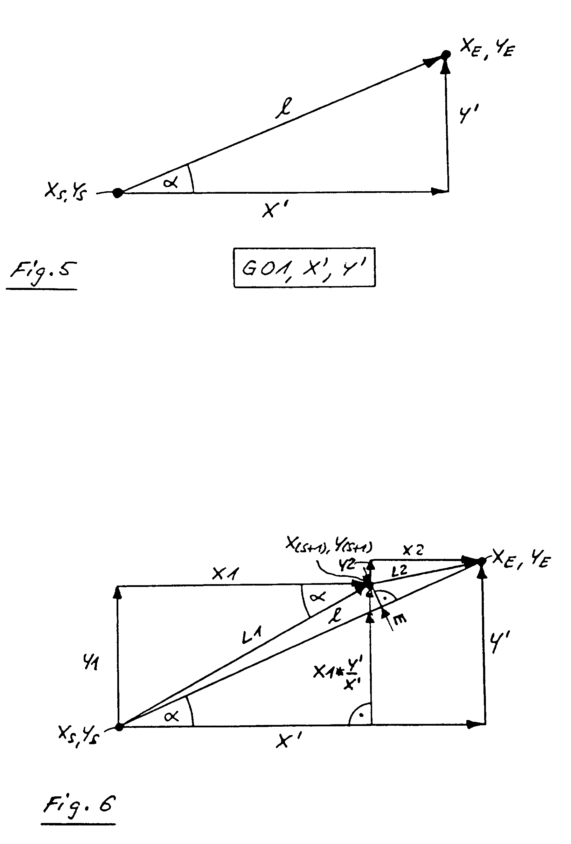

Fig. 3 und 4 illustrieren das Prinzip der Grobinterpolation ohne Winkelfunktionen: Ein Kreisstück soll im Gegenuhrzeigersinn gefahren werden. Die Information liegt z.B. nach DIN 66025 in ISO-Code vor, wobei GO3 zirkulare Interpolation im Gegenuhrzeigersinn bedeutet, $X'$, $Y'$ sind die Differenzmasse zwischen den Startkoordinaten $X_S$, $Y_S$ und den Endkoordinaten $X_E$, $Y_E$ . $I'$ und $J'$ sind schliesslich die Differenzmasse zwischen den Startkoordinaten $X_S$, $Y_S$ und dem Kreismittelpunkt M . Der Winkel $\epsilon$ wird von der X-Achse und der Verbindungslinie Kreismittelpunkt M -Startkoordinaten $X_s$,

$Y_s$ eingeschlossen. Der Winkel $\alpha$ wird von dieser Verbindungslinie und dem Lot vom Kreismittelpunkt M auf den Vektor $L_1$ eingeschlossen.

Damit der Feininterpolator 2 nur linear zu interpolieren braucht, und nur eine minimale Datenmenge erzeugt wird, muss ein Polygonzug $L_1$...$L_4$ gefunden werden, der nirgends um mehr als einen Fehlerwert E von höchstens einem zulässigen Wert gegenüber dem theoretischen Kreis abweicht. Dieser zulässige Fehler kann z.B. 1$\mu$m betragen, oder aber z.B. für Zerstörungsschnitte, bei denen die Genauigkeit keine Rolle spielt, sehr viel mehr. Zur besseren Uebersichtlichkeit wird nachfolgend auf die vektorielle Schreibweise verzichtet.

Man geht nun folgendermassen vor:

1. Es wird der Kreisradius (r) bestimmt

$$r = \sqrt{I^{'*}I^{'} + J^{'*}J^{'}}$$

2. Nun kann über das rechtwinklige Dreieck mit dem Winkel $\alpha$ (in Fig. 4) die maximale Sehnenlänge L bei gegebenem Fehler E bestimmt werden.

$$L_1 = 2^* \sqrt{r^*r - (r-E)^*(r-E)}$$

3. Anhand einer gespeicherten Liste für zulässige Werte von L, welche später noch erläutert wird, kann der nächstkleinere, ganzzahlige Wert der Vektorlänge L ausgewählt werden.

Da die Vektoren $L_1$...$L_3$ alle gleichlang sind, müssen die vorgenannten Berechnungen nur einmal pro Geometriesatz ausgeführt werden.

4. Da die Winkelsumme in Dreiecken immer 180° ist, kann man nachweisen, dass der Winkel zwischen $L_1$ und $Y_1$ der Summe von $\alpha + \epsilon$ entspricht.

Damit wird $X_1 = L_1^*\sin(\alpha + \epsilon)$ und $Y_1 = L_1^*\cos(\alpha + \epsilon)$.

Nach goniometrischer Umformung ergibt sich, dass

$\sin (\alpha + \epsilon) = \sin \epsilon \,^*\cos\alpha + \cos\epsilon \,^* \sin\alpha$ ist, und dass

$\cos (\alpha + \epsilon) = \cos\epsilon \,^* \cos\alpha - \sin\epsilon \,^* \sin\alpha$ ist.

Aus Fig. 4 folgt nun, dass

$\sin \alpha = L_1/(2^*r)$, $\cos \alpha = 1-E/r$

$\sin \epsilon = J^{'}/r$     $\cos \epsilon = I^{'}/r$ ist.

Damit sind die Winkelfunktionen eliminiert und die gesuchten Achsenkomponenten $X_1$, $Y_1$ ergeben sich wie folgt:

$$X_1 = L_1 \, (J^{'}/r^*(1-E/r) + I^{'}/r^*L_1/(2^*r))$$
$$Y_1 = L_1 \, (I^{'}/r^*(1-E/r) - J^{'}/r^*L_1/(2^*r))$$

Man sieht noch, dass nur $J^{'}$ und $I^{'}$ Variablen

sind, während dem der Rest pro Geometriesatz konstant ist, und ebenfalls nur einmal berechnet, werden muss. Jetzt wird:

$$X_1 = J^{'*}K_1 + I^{'*}K_2 \qquad K_1 = L_1^*(1-E/r)/r$$
$$Y_1 = I^{'*}K_1 - J^{'*}K_2 \qquad K_2 = L_1^*L_1/(2^*r^*r)$$

5. Eventuelle alte Rundungsfehler werden nun zu $X_1$ und $Y_1$ addiert und das Resultat auf eine ganze Zahl gerundet. Der neue Rundungsfehler wird abgespeichert.

6. Die ersten Bahnelemente $L_1$, $X_1$, $Y_1$ können an den Feininterpolator 2 ausgegeben werden.

7. Es werden die neuen Differenzmasse zu den Endkoordinaten $X_E$, $Y_E$ berechnet:

$$X\text{-Achse} = X^{'}\text{-}X_1 \qquad Y\text{-Achse} = Y^{'} - Y_1$$

sowie die neuen Kreismittelpunktmasse:

$$I^{'}_1 = I^{'}\text{-}X_1, \; J^{'}_1 = J^{'}\text{-}Y_1$$

8. Nun wiederholt man solange das Vorgehen nach Punkt 4 bis 7 bis die Endkoordinaten $X_E$, $Y_E$ mit einer letzten nach Tabelle zulässigen Vektorlänge L erreicht werden können.

In Fig. 3 ist das z.B. $L_4$. Der Vektor $L_4$ kann damit höchstens gleichlang wie $L_1$ werden. Gestattet die Tabelle der zulässigen Vektorlängen L keinen direkten Sprung, so kann der Vektor $L_4$ aus zwei oder mehreren Bahnelementen L,X,Y zusammengesetzt werden. Mit diesem Schluss-Vektor $L_4$ können verschiedene Fehler kompensiert werden, z.B. der letzte Rundungsfehler, die endliche Rechengenauigkeit des verwendeten Prozessors und die oft störende Ueberbestimmtheit der Endkoordinaten $X_E$, $Y_E$ durch den ISO-Code.

Die Fig. 5 und Fig. 6 zeigen analog das Berechnungsverfahren für die lineare Grobinterpolation. Im ISO-Code bedeutet GO1 lineare Interpolation. $X^{'}$ und $Y^{'}$ sind wiederum die Differenzmasse zwischen den Startkoordinaten $X_S$, $Y_S$ und den Endkoordinaten $X_E$, $Y_E$.

Die lineare Interpolation ist insofern ein Spezialfall als häufig Geometriesätze auftreten, welche nur eine Achse betreffen. Durch die beschränkte Stellenzahl des Feininterpolators 2 (siehe dazu auch D. Binder, Seite 114) wird es sinnvoll einen Multiplikationsfaktor N den Bahnelementen L,X,Y,Z,C beizugeben, welcher bestimmt, wie oft ein Bahnelement L,X,Y,Z,C im Feininterpolator 2 ausgeführt werden soll. Damit erreicht man eine weitere drastische Reduktion der Datenmenge.

Es sei angenommen, in X-Richtung müsse man 127.000 mm mit einer Geschwindigkeit von nur 10 mm/min und Weginkrementen von 1$\mu$m interpolieren. Im festen Zeitrasterprinzip von 20 ms würde dabei ein traditioneller Grobinterpolator eine Daten-

flut von 38'100 Bahnelementen L,X,Y,Z,C erzeugen, mit dem vorgeschlagenen Prinzip jedoch kann dies mit einem einzigen Bahnelementensatz N*L,X,Y,Z,C erledigt werden, sofern der Feininterpolator 7-stellig ist.

Bei mehrachsiger Bewegung und kleinem zulässigen Bahnfehler E ist zwar der Gewinn kleiner als im obigen Beispiel, da die Datenmenge aber nur geometrieabhängig ist, kommt man immer mit einer viel geringeren Rechnerbelastung aus.
In Fig. 5 ist die theoretisch geforderte lineare Bahn mit $\ell$ bezeichnet. Sie schliesst mit $X'$ den Steigungswinkel $\alpha$ ein. Tangens $\alpha$ ist also $Y'/X'$, Cosinus $\alpha$ ist gleich $X'/\ell$, und Sinus $\alpha$ ist gleich $Y'/\ell$.
In Fig. 6 ist dargestellt, wie die theoretische Bahn $\ell$ mit z.B. zwei Sätzen von Bahnelemente $L_1$, $X_1$, $Y_1$ und $L_2$, $X_2$, $Y_2$ ausgeführt werden kann, wobei der Bahnfehler E rechtwinklig zur theoretischen Bahn $\ell$ entsteht.
Der Algorithmus versucht also mit einem grösstmöglichen $L_1$ in die Nähe der Endkoordinaten $X_E$, $Y_E$ zu gelangen. Dabei werden von vornherein nur nach abgespeicherter Tabelle zulässige Vektorlängen L verwendet. Es können dann die Achsenkomponenten $X_1$, $Y_1$ berechnet und auf ganzzahlige Beträge welche in den Wegraster passen, gerundet werden. Es wird $X_1 = L_1 * X'/\ell$ und $Y_1 = L_1 * Y'/\ell$. Anschliessend ist abzuklären, ob der erzeugte Bahnfehler E kleiner oder gleich dem zulässigen Wert ist. Dabei ist $E = (Y_1 - X_1 * Y'/X') - *Y'/\ell$. Ist dieser Bahnfehler (E) zu gross, wird die ganze Berechnung mit der nächstkleineren zulässigen Vektorlänge L wiederholt, andernfalls werden die ersten Bahnelemente $L_1$, $X_1$, $Y_2$ an den Feininterpolator 2 ausgegeben.
Anschliessend wird die neue Massdifferenz zu den Endkoordinaten $X_E$, $Y_E$ berechnet: X-Achse $= X' - X_1$ und Y-Achse $= Y' - Y_1$ und die Prozedur so oft wiederholt, bis die Massdifferenz zu Null wird. Die Rundungsfehler und Berechnungsrestfehler werden dabei automatisch eliminiert.

Die Achsenkomponenten X, Y, Z, C werden vom Grobinterpolator 1 durch einen optimierten Wert geteilt und gerundet.

Dieser Wert ist für einen siebenstelligen Feininterpolator 2 gleich der Vektorlänge L geteilt durch 128, wobei 127.97 bis 128.01 gleich gute Resultate ergibt. Diese Konstante 128 kann experimentell oder durch eine Computersimulation ermittelt werden. Der optimale Wert ist der welcher die grösste Anzahl zulässiger Vektorlängen L ergibt, die für keine Achsenkomponenten-Kombination X,Y,Z,C einen durch Rundung bedingten Endfehler erzeugen. Wenn z.B. für die X-Achse 80 Weginkremente vom Grobinterpolator 1 berechnet wurden, müssen später auch genau deren 80 vom Feininterpolator 2 auf den Achsenausgang TX ausgegeben werden. Für das erwähnte Beispiel ergeben sich 43 zulässige Vektorlängen, und man erhält folgende im Grobinterpolator 1 abzuspeichernde Tabelle:
1 bis 10 lückenlos, dann 12,14,15,16,17,18,20,24,28,30, 31,32,33,34,36,40,48,56,60,62,63,64,65,66,68,72,80-,96,112,120,124,126,127.

Nach kurzer Analyse dieser Werte sieht man, dass jede Vektorlänge L zwischen 1 und 127 aus höchstens 2 Teilvektoren kombiniert werden kann.

**Patentansprüche**

1. Numerisches Steuersystem für hochdynamische Prozesse, insbesondere zum Steuern der Bahn einer Funkererosionsmaschine, mit einem Grobinterpolator (1) zum Ausgeben von vektoriellen Bahnelementen (L, X, Y, Z, C) an einen Feininterpolator (2), wobei der Grobinterpolator die Grobinterpolation zeitrasterunabhängig aber abhängig von der Geometrie der Bahnkontur in der Weise ausführt,
   a) daß aus einer Gruppe von vorbestimmten Vektorlängen, beginnend mit der größten Vektorlänge, die Bahnelemente (L, X, Y, Z, C) berechnet werden,
   b) daß für diese Bahnelemente (L, X, Y, Z, C) ein Bahnfehler (E) relativ zur theoretischen Bahn ermittelt wird, und mit einem maximalen Bahnfehlerwert verglichen wird,
   c) daß die Bahnelemente (L, X, Y, Z, C) vom Grobinterpolator (1) ausgegeben werden, wenn der Bahnfehler (E) den maximalen Bahnfehlerwert nicht überschreitet und
   d) daß der Grobinterpolator (1) andernfalls erneut Bahnelemente (L, X, Y, Z, C) aufgrund der nächst kleineren Vektorlänge aus den vorbestimmten Vektorlängen berechnet und anschließend zum Schritt b) zurückkehrt.

2. Numerisches Steuersystem nach Anspruch 1, dadurch gekennzeichnet,
   e) daß der Grobinterpolator (1) nach der Berechnung der Bahnelemente (L, X, Y, Z, C) den Abstand zum Endpunkt der Bahnkontur ermittelt,
   f) daß der Grobinterpolator (1) für den Fall, daß der Abstand zu Null geworden ist, die Grobinterpolation beendet, und
   g) daß der Grobinterpolator (1) andernfalls zum Schritt a) zurückkehrt.

3. Numerisches Steuersystem nach Anspruch 1 oder 2, dadurch gekennzeichnet,
   daß die vorbestimmten Vektorlängen durch eine Simulation in der Weise bestimmt werden, daß durch Kombination zweier vorbestimmter Vektorlängen jeder Längenwert zwischen 1 und einem Maximalwert (127) zusammensetzbar ist.

## Claims

1. A numerical control system for highly dynamic processes, in particular for controlling a path of an electric discharge machine, having a coarse interpolator (1) for the emission of vectorial path elements (L, X, Y, Z, C) to a fine interpolator (2), whereby the coarse interpolator performs the coarse interpolation independently of the time frame but dependent on the geometry of the path contour so that
    a) from a group of predetermined vector lengths, starting with the largest vector length, the path elements (L, X, Y, Z, C) are calculated,
    b) for these path elements (L, X, Y, Z, C) a path error (E) relative to the theoretical path is determined, and is compared with a maximum path error value,
    c) the path elements (L, X, Y, Z, C) are emitted by the coarse interpolator (1) when the path error (E) does not exceed the maximum path error value,
    d) the coarse interpolator (1) otherwise again calculates path elements (L, X, Y, Z, C) on the basis of the next smaller vector length from the predetermined vector length and then returns to step b).

2. A numerical control system according to Claim 1, **characterised in that,**
    e) after calculating the path elements (L, X, Y, Z, C) the coarse interpolator (1) determines the distance to the end point of the path contour,
    f) the coarse interpolator (1) ends the coarse interpolation in the event that the distance has become zero, and
    g) the coarse interpolator (1) otherwise returns to step a).

3. A numerical control system according to Claim 1 or 2, characterised in that the predetermined vector lengths are determined by a simulation so that by the combination of two predetermined vector lengths every length value between 1 and a maximum value (127) can be composed.

## Revendications

1. Système de commande numérique pour processus à grande dynamique, notamment pour commander la trajectoire d'une machine d'électroérosion, comportant : un interpolateur approximatif (1) pour délivrer des éléments de trajectoire vectoriels (L, X, Y, Z, C) à un interpolateur fin (2), l'interpolateur approximatif effectuant l'interpolation approchée indépendamment de la trame chronologique, toutefois en fonction de la géométrie du contour-trajectoire, de façon telle
    a) que les éléments de trajectoire (L, X, Y, Z, C) soient calculés à partir d'un groupe de longueurs de vecteur prédéterminées, en commençant par la plus grande longueur de vecteur,
    b) qu'une erreur de trajectoire (E) par rapport à la trajectoire théorique soit déterminée et comparée à une valeur maximale d'erreur de trajectoire,
    c) que les éléments de trajectoire (L, X, Y, Z, C) soient délivrés par l'interpolateur approximatif (1) lorsque l'erreur de trajectoire n'excède pas la valeur maximale d'erreur de trajectoire, et
    d) que, sinon, l'interpolateur approximatif (1) calcule à nouveau des éléments de trajectoire (L, X, Y, Z, C) sur la base de la longueur de vecteur plus petite suivante, cela à partir des longueurs de vecteur prédéterminées, puis revienne à l'étape b).

2. Système de commande numérique selon revendication 1, caractérisé
    e) par le fait qu'après le calcul des éléments de trajectoire (L, X, Y, Z, C), l'interpolateur approximatif (1) détermine la distance au point final du contour-trajectoire,
    f) par le fait que l'interpolateur approximatif (1) met fin à l'interpolation approchée dans le cas où cette distance est devenue nulle, et
    g) par le fait que s'il n'en est pas ainsi, l'interpolateur approximatif revient à l'étape a).

3. Système de commande numérique selon revendication 1 ou 2, caractérisé par le fait que les longueurs de vecteur prédéterminées sont déterminées par une simulation, de manière que chaque valeur de longueur puisse être composée, entre 1 et une valeur maximale (127), par combinaison de deux longueurs de vecteur prédéterminées.

Fig. 1

Fig. 2

Fig. 3

Fig. 4

Fig.5

$GO1, X', Y'$

Fig. 6